# DEMANDE DE BREVET EUROPEEN

(11) **EP 4 760 505 A1**
(43) Date de publication de la demande: **17.06.2026**
(21) Numéro de dépôt: 25222689.9
(22) Date de dépôt: 11.12.2025
(51) Int. Cl.: G06F 9/48, G06F 9/50, G06F 11/28

(54) **PROCÉDÉ ET SYSTÈME D'ORCHESTRATION D'EXÉCUTION DE TÂCHES LOGICIELLES**

(30) Priorité: 12.12.2024 FR 2413996
(71) Demandeur: THALES, 92190 Meudon (FR)
(72) Inventeur: LECANUET, Christophe, 92622 GENNEVILLIERS CEDEX (FR); PHEMIUS, Kévin, 92622 GENNEVILLIERS CEDEX (FR)
(74) Mandataire: Lavoix

(57) **Abrégé**

Ce système d'orchestration (4) comporte au moins une instance (16) d'un service d'orchestration d'exécution de tâches selon des diagrammes d'exécution de processus (35), et une base de données (14) à haute disponibilité, chaque instance (16) du service d'orchestration étant configurée pour communiquer avec la base de données (14) ; suite à une réception d'une requête d'exécution de processus, une instance du service d'orchestration (16) est configurée pour transformer la requête d'exécution en un évènement de déclenchement de l'exécution d'un processus associé, une mise en forme dudit évènement de déclenchement en une commande d'exécution par ladite base de données du processus associé, et une transmission de la commande d'exécution à la base de données, la base de données (14) mettant en œuvre un mécanisme d'exécution du processus associé à l'évènement de déclenchement, comportant une exécution d'au moins une transition entre états et une mémorisation d'états d'exécution dans ladite base de données.

## Description

La présente invention concerne un procédé et un système d'orchestration d'exécution de tâches logicielles.

L'invention se situe dans le domaine de la mise en œuvre logicielle de processus divers, définis par des diagrammes (ou flux) d'exécution, sur des systèmes informatiques interconnectés, et trouve des applications dans de nombreux domaines pratiques, par exemple dans les architectures de réseau défini par logiciel, SDN (de l'anglais « Software Defined Network »), dans la gestion logicielle de réseaux de transport, dans la gestion logicielle des processus industriels...

Pour les diverses applications, des systèmes informatiques interconnectés échangent et traitent des données pour fournir des services à des clients. Le traitement des données est effectué selon des processus de traitement, impliquant des données en provenance de serveurs externes, d'applications clientes, des données du système informatique, des tâches à effectuer (e.g. lecture/écriture de données dans une base de données, appel de procédure externes, calculs/tests sur les données), l'exécution des tâches devant être ordonnancée et coordonnée.

L'ordonnancement des exécutions et des transitions entre états du processus est défini par des diagrammes d'exécution de processus, appelés « Workflows » en anglais, définissant des états, des transitions entre états, les transitions étant définies par des séquencement d'exécution d'actions, incluant des exécutions de tâches. De tels diagrammes d'exécution sont formalisés selon des modèles standardisés, par exemple le modèle BPMN (« *Business Process Model and Notation »*)*.* Un tel modèle permet de définir des flux parallèles d'exécution de tâches.

La mise en œuvre de tels diagrammes d'exécution de processus est effectuée par un mécanisme (ou moteur) d'exécution de tâche, connu sous le nom anglais de « workflow engine ». L'exécution de processus induit des exécutions ordonnancées de diverses tâches, selon les diagrammes d'exécution préalablement définis et mémorisées.

Un service d'orchestration est, de manière connue, une application logicielle qui implémente un moteur de tâche et gère les interactions de ce moteur avec des services extérieurs, par exemple fournis par des serveurs extérieurs. On y trouve notamment les composants suivants : un stockage de l'état des processus, une fonction assurant les transitions des processus, une file d'attente des tâches à exécuter et un module d'interface avec les services externes à orchestrer.

Pour de nombreuses applications, il est également nécessaire de fournir un système d'exécution de tâches à haute disponibilité (en anglais « high availability »). La haute disponibilité est définie pour les services et systèmes informatiques comme étant un taux de disponibilité convenable. Le taux de disponibilité est mesuré par le ratio entre la durée totale pendant laquelle un système est opérationnel par rapport à la durée totale souhaitée. Par exemple, un système est dit à haute disponibilité si son taux de disponibilité est supérieur à 90%. Dans le domaine informatique, le taux de disponibilité est exprimé par 99,9% ou 99,99% ou 99,999% etc. Plus le taux de disponibilité est élevé, plus le système est à haute disponibilité.

Afin d'augmenter la fiabilité et la haute disponibilité de l'ensemble d'une application construite autour d'un orchestrateur de tâche, il est nécessaire d'assurer la haute disponibilité du service d'orchestration lui-même, en démarrant plusieurs instances d'un tel service. Cependant, cela rend la gestion des diverses instances du service d'orchestration plus complexe, et nécessite notamment un partage des états courants de l'exécution des processus entre les diverses instances du service d'orchestration. Une telle architecture est désignée par le terme anglais « stateful ».

Le but de l'invention est de remédier aux inconvénients précités de l'état de la technique.

A cet effet, l'invention a pour objet un procédé d'orchestration de tâches logicielles mis en œuvre par un système d'orchestration comportant au moins une instance d'un service d'orchestration d'exécution de tâches selon des diagrammes d'exécution de processus comportant des états d'exécution et des transitions entre états définissant des tâches à exécuter, et une base de données à haute disponibilité, la ou chaque instance du service d'orchestration étant configurée pour communiquer avec ladite base de données.

Lors d'une phase d'initialisation, la ou chaque instance du service d'orchestration est configurée pour commander un chargement d'une structure de données représentatives des diagrammes d'exécution de processus dans la base de données. Le procédé comporte en outre dans une phase opérationnelle, des étapes, par une instance du service d'orchestration, suite à une réception d'une requête d'exécution de processus, de :
transformation de la requête d'exécution reçue en un évènement de déclenchement de l'exécution d'un processus associé,
mise en forme dudit évènement de déclenchement en une commande d'exécution par ladite base de données du processus associé à l'évènement de déclenchement, et
une transmission de la commande d'exécution à la base de données, et en outre, sur réception de ladite commande d'exécution, ladite base de données met en œuvre un mécanisme d'exécution du processus associé à l'évènement de déclenchement, comportant une exécution d'au moins une transition entre états et une mémorisation d'états d'exécution dans ladite base de données.

Avantageusement le procédé d'orchestration proposé utilise des instances du service d'orchestration sans partage des états d'exécution du processus; la gestion des états d'exécution du processus étant complément déléguée à une base de données à haute disponibilité.

Suivant d'autres aspects avantageux de l'invention, le procédé d'orchestration d'exécution de tâches logicielles comprend une ou plusieurs des caractéristiques suivantes, prises isolément ou suivant toutes les combinaisons techniquement possibles.

La mise en œuvre du mécanisme d'exécution comporte au moins une détermination de tâche à exécuter, une tâche à exécuter étant identifiée par un identifiant de tâche, et une distribution des tâches à exécuter, selon un ordre déterminé, à des instances du service d'orchestration.

Le procédé comporte, suite à une transmission d'une tâche à exécuter à une instance du service d'orchestration donnée, une initialisation d'un compteur temporel, une surveillance d'une réception d'un acquittement de l'exécution de ladite tâche à exécuter, et en l'absence d'acquittement avant que ledit compteur temporel atteigne une durée prédéterminée, une distribution de ladite tâche à exécuter à une autre instance du service d'orchestration.

La mise en œuvre du mécanisme d'exécution comporte, suite à une réception d'acquittement d'exécution d'une tâche à exécuter, une distribution d'une tâche à exécuter suivante.

Lors de la phase d'initialisation, chaque instance du service d'orchestration souscrit à un groupe de distribution de tâches à exécuter géré par la base de données.

La structure de données étant un script, et lors de la phase opérationnelle, ladite commande d'exécution transmise à la base de données comporte un identifiant dudit évènement de déclenchement et un identifiant unique dudit script.

Suite à la commande d'exécution, la base de données met en œuvre une exécution de transition entre états d'exécution du processus comportant une initialisation d'un jeton d'exécution et d'un état d'exécution courant, puis une détermination d'une action à effectuer dans l'état d'exécution courant et une mise en œuvre de ladite action jusqu'à ce que toutes les actions à effectuer soient terminées.

L'invention concerne également un système d'orchestration d'exécution de tâches logicielles comportant au moins une instance d'un service d'orchestration d'exécution de tâches selon des diagrammes d'exécution de processus comportant des états d'exécution et des transitions entre états définissant des tâches à exécuter, et une base de données à haute disponibilité, la ou chaque instance du service d'orchestration étant configurée pour communiquer avec un service de base de données à haute disponibilité, ledit système étant configuré pour mettre en œuvre un procédé d'orchestration d'exécution de tâches logicielles tel que brièvement décrit ci-dessus.

L'invention concerne également un programme d'ordinateur comportant des instructions logicielles qui, lorsqu'elles sont exécutées par un ordinateur, mettent en œuvre un procédé d'orchestration d'exécution de tâches logicielles tel que défini ci-dessus.

L'invention apparaîtra plus clairement à la lecture de la description qui va suivre, donnée uniquement à titre d'exemple non limitatif, et faite en référence aux dessins dans lesquels :
la figure 1 est un schéma-blocs d'un système informatique comportant un système d'orchestration d'exécution de tâches logicielles selon un mode de réalisation ;
la figure 2 est un schéma-blocs d'une instance de service d'orchestration d'exécution de tâches logicielles et d'un service de bases de données associé selon un mode de réalisation ;
la figure 3 est un synoptique des principales étapes d'un procédé d'orchestration d'exécution de tâches logicielles selon un mode de réalisation ;
la figure 4 est un synoptique d'un diagramme de mise en œuvre d'une transition entre états d'exécution par le moteur d'exécution de processus selon un mode de réalisation.

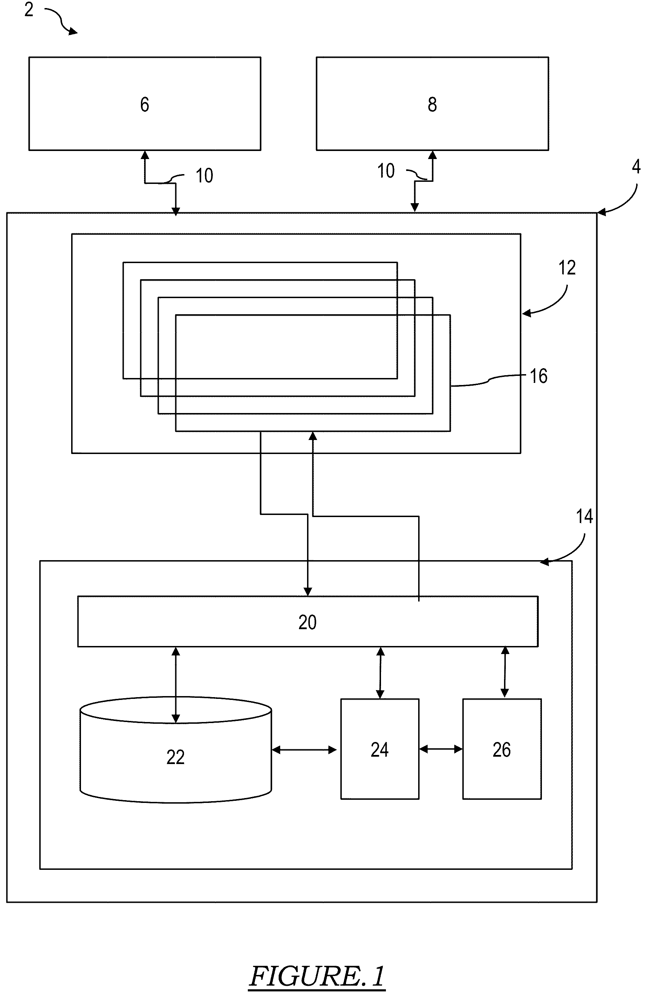

La figure 1 illustre schématiquement un système informatique 2 comprenant un système d'orchestration d'exécution de tâches logicielles 4, un ou plusieurs serveurs distants 6, un ou plusieurs clients distants 8.

Le système d'orchestration d'exécution de tâches logicielles 4 est adapté pour communiquer avec les divers serveurs distants 6 et clients distants 8 par des liaisons de communication bidirectionnelles 10, par exemple via un réseau de communication, les liaisons de communications étant filaires ou sans fil.

Le système d'orchestration d'exécution de tâches logicielles 4, appelé simplement système d'orchestration 4 par la suite comporte un premier sous-système 12 et un deuxième sous-système 14.

Le premier sous-système 12 et le deuxième sous-système 14 sont configurés pour communiquer entre eux, par des liaisons de communication bidirectionnelles, par exemple via un réseau de communications Ethernet.

Le premier sous-système 12 comporte au moins une instance 16 d'un service d'orchestration d'exécution de tâches logicielles, appelé également simplement service d'orchestration.

Plus généralement, le premier sous-système 12 comporte un nombre N strictement supérieur à 1 d'instances 16 du service d'orchestration d'exécution de tâches logicielles.

De préférence, chacune des instances 16 service d'orchestration est exécutée sur des dispositifs électroniques programmables distincts, de manière à assurer une redondance matérielle et logicielle.

Par exemple, chaque instance 16 du service d'orchestration est exécutée sur une infrastructure de dispositifs électroniques programmables de calcul et de stockage de données, configurés pour communiquer entre eux.

Le deuxième sous-système 14 comporte une base de données 14 à haute disponibilité, qui fournit des services à haute disponibilité via une interface d'utilisation 20, notamment de services de stockage de données sur des mémoires électroniques 22, des services d'exécution de commandes sur des processeurs de calcul 24, des services de messagerie et gestion de groupe de consommateurs 26. Les services à haute disponibilité fournis par la base de données sont commandés par des commandes issues des instances 16 du service d'orchestration.

De préférence, la base de données 14 est mise en œuvre sur une infrastructure de dispositifs électroniques programmables de calcul et de stockage de données.

Avantageusement, des bases de données de haute disponibilité, supérieure ou égale à 99,99%, sont disponibles sur étagère.

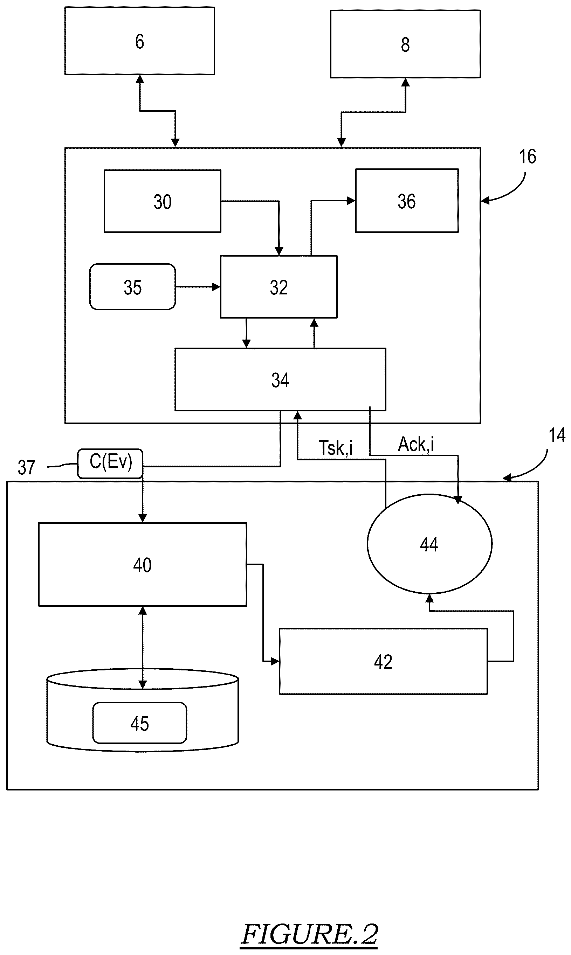

En référence à la figure 2 sont décrits les principaux modules fonctionnels d'une instance 16 du service d'orchestration et de la base de données 14 pour réaliser un système d'orchestration d'exécution de tâches logicielles.

L'instance 16 du service d'orchestration est configurée pour recevoir une requête d'exécution, en provenance d'un système externe, par exemple en provenance d'un client 8 via un protocole de commandes distantes tel que REST (pour REpresentational State Transfer), ou RPC (pour Remote Procedure Call) ou une notification de changement dans une base de données. De plus l'instance 16 du service d'orchestration exécute un module de transformation 30 de la requête d'exécution en évènement de déclenchement d'au moins un processus à exécuter.

Les diagrammes 35 d'exécution de processus sont mémorisés, au moins temporairement, dans une unité de mémoire électronique (e.g. mémoire vive) du dispositif électronique de calcul exécutant l'instance 16 du service d'orchestration. Chaque diagramme d'exécution 35 définit des états d'exécution et des transitions entre les états, une transition entre deux états définissant des actions/tâches à exécuter, ainsi que des conditions à valider.

L'instance 16 du service d'orchestration est configurée pour exécuter en outre un module 32 de mise en forme des diagrammes 35 d'exécution de processus en une structure de données, par exemple un script, exploitables par la base de données 14.

L'instance 16 du service d'orchestration est configurée pour exécuter en outre un module 34 d'interfaçage avec la base de données, permettant, en coopération avec le module 32, d'obtenir, à partir de l'évènement de déclenchement d'un processus, une commande 37 d'exécution du processus, la commande étant en un format interprétable par la base de données.

L'instance 16 du service d'orchestration est configurée pour exécuter en outre un module 36 d'exécution de tâche et/ou de commande d'exécution de tâche auprès d'un serveur 6 de calcul externe et de réception d'un résultat d'exécution en réponse à une commande d'exécution de tâche.

Avantageusement, chaque instance 16 du service d'orchestration est en mode « sans partage d'états » ou mode « stateless », la gestion de la totalité des états étant avantageusement effectuée par la base de données 14.

Les modules 30, 32, 34, 36 sont réalisés sous forme d'instructions logicielles formant un programme d'ordinateur, qui, lorsqu'il est exécuté par un dispositif électronique programmable, met en œuvre des étapes d'un procédé d'orchestration d'exécution de tâches logicielles tel que décrit plus en détail ci-après.

En variante non représentée, les modules 30, 32, 34, 36 sont réalisés chacun sous forme de composants logiques programmables, tels que des FPGA (de l'anglais *Field Programmable Gate Array*), des microprocesseurs, des composants GPGPU (de l'anglais *General-purpose processing on graphics processing*)*,* ou encore de circuits intégrés dédiés, tels que des ASIC (de l'anglais *Application Specific Integrated Circuit*)*.*

Le programme d'ordinateur comportant des instructions logicielles est en outre apte à être enregistré sur un support d'enregistrement d'informations, non-transitoire et lisible par ordinateur. Ce support lisible par ordinateur est par exemple, un médium apte à mémoriser les instructions électroniques et à être couplé à un bus d'un système informatique. A titre d'exemple, ce support est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

La base de données 14 est configurée pour mettre en œuvre, via des commandes issues du module d'interfaçage 34 d'une instance du service d'orchestration, un module 40 de mise en œuvre de transitions entre états, définies par le diagramme d'exécution de processus associé à la commande d'exécution reçue, les états d'exécution 45 étant mémorisés. Le module 40 assure une exécution atomique, c'est-à-dire une exécution complète entre un état de début Ei et un état de fin Ef.

En cas d'interruption de l'exécution, un retour à l'état de début Ei est garanti par la base de données.

La base de données 14 est en outre configurée pour mettre en œuvre, suite aux commandes issues du module d'interfaçage 34 d'une instance du service d'orchestration, un module 42 de gestion ordonnancée des tâches à exécuter, par exemple sous forme de files d'attentes, et un module de distribution 44 des tâches Tsk_i à exécuter aux instances 16 du service d'orchestration et de réception d'acquittement Ack_i d'exécution de tâches.

Dans un mode de réalisation, la première instance du service d'orchestration qui démarre configure la base de données 14 via des commandes issues de son module d'interfaçage, les N-1 autres instances du service d'orchestration étant informées, via un compte-rendu, que les ressources de la base de données sont configurées.

Avantageusement, la base de données 14 gère l'exécution des transitions, la mémorisation des états des processus, la distribution des tâches à exécuter et la reprise sur erreur si une tâche n'est pas acquittée.

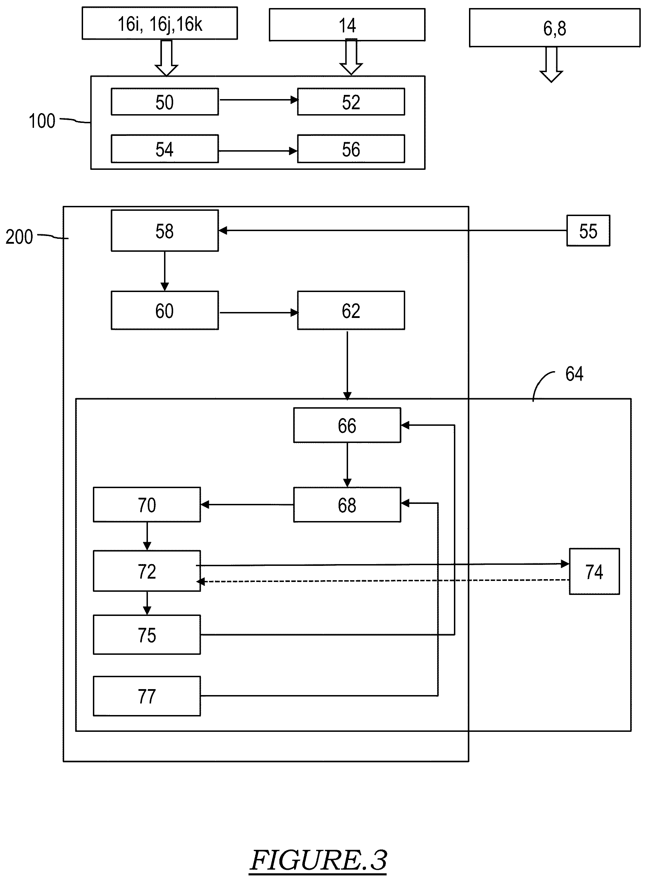

La figure 3 est un synoptique des principales étapes d'un procédé d'orchestration d'exécution de tâches logicielles mis en œuvre par un système d'orchestration 4 tel que décrit ci-dessus.

Le procédé comprend des étapes mises en œuvre par des instances 16i, 16j du service d'orchestration, des étapes mises en œuvre par la base de données 14 via des commandes issues des instances 16i, 16j du service d'orchestration.

La base de données 14 est par exemple une base de données « clés-valeurs ».

Dans la figure 3 sont également illustrées des étapes mises en œuvre par des entités externes, telles qu'un serveur 6 et/ou un client 8.

Le procédé comprend une phase d'initialisation 100 et une phase opérationnelle 200 d'exécution de tâches logicielles.

Dans la phase d'initialisation 100, l'instance 16 du service d'orchestration met une étape 50 de commande de chargement par la base de données 14 d'une structure de données représentatives des diagrammes d'exécution de processus, chaque diagramme définissant des transitions à exécuter.

Par exemple la structure de données représentatives des diagrammes d'exécution de processus est un script formaté selon un langage de formatage prédéterminé, par exemple en langage LUA.

Le script sera également appelé script d'exécution de transitions.

Suite à la commande de chargement, la base de données 14 exécute 52 un chargement du script dans une mémoire, et identifie le script par un identifiant de script, qui est un identifiant unique, Script-id, cet identifiant étant transmis aux instances du service d'orchestration pour une utilisation dans des appels/commandes ultérieures.

La phase d'initialisation comprend en outre une étape 54 de souscription de l'instance 16 du service d'orchestration, d'un groupe de distribution de tâches à exécuter, qui est un groupe de consommateurs.

Si le groupe de consommateurs n'existe pas, il est créé (étape 56) par le service 26 de messagerie et de gestion de groupe de consommateurs de la base de données 14.

Suite à la souscription l'instance 16 du service d'orchestration se met en attente de message sur le groupe de consommateurs créé. Un mécanisme d'échange par messages asynchrones de type « pull » est mis en œuvre.

Chaque instance 16 du service d'orchestration est identifiée par un nom unique associé, afin de distinguer entre les N instances 16 du service d'orchestration mises en œuvre de manière redondante.

Le procédé comporte en outre une phase opérationnelle 200.

Suite à une requête, appelée « requête d'exécution », en provenance d'un système externe, comportant divers arguments et paramètres, transmise 55 via un protocole de commandes distantes, l'instance 16 du service d'orchestration transforme 58 la requête d'exécution en un évènement de déclenchement d'exécution d'un processus associé, puis met en forme 60 l'évènement de déclenchement d'exécution d'un processus en une commande d'exécution du processus par la base de données 14.

La commande d'exécution du processus générée comporte notamment l'identifiant du script d'exécution des transitions, une désignation de l'évènement de déclenchement et optionnellement, une identification du processus en cours d'exécution. Si l'événement est un événement de démarrage de processus, son identifiant sera alloué par l'exécution du script.

La base de données 14 reçoit la commande d'exécution du processus générée, récupère 62 le script associé et met en œuvre 64 l'exécution de ce script.

En d'autres termes, la base de données 14 met en œuvre le moteur d'exécution de processus.

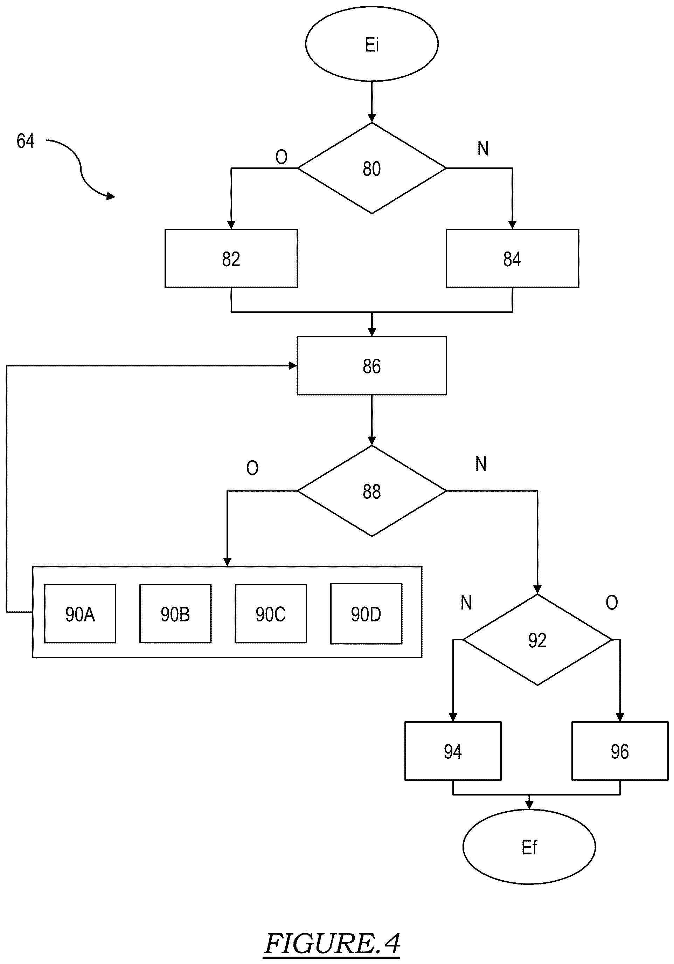

En particulier, la mise en œuvre du mécanisme d'exécution comporte une exécution d'une transition entre états du processus, décrite en référence à la figure 4.

Partant d'un état initial Ei de début de transition, le moteur d'exécution met en œuvre une vérification 80 de l'existence d'un jeton (en anglais « token ») d'exécution correspondant à l'identifiant du processus à exécuter ou en cours d'exécution.

Le jeton permet de suivre l'état d'exécution en cours d'un processus. Le jeton correspond à une entrée dans la base de données 14 contenant l'état courant du processus. En particulier, un jeton est défini sous forme de «clé-valeur », la clé étant un identifiant du jeton token_id et la valeur étant représentative de l'état du processus.

Un processus peut démarrer des sous-processus, chaque sous-processus ayant un jeton associé. Lorsqu'un processus se termine, son jeton est détruit (supprimé de la base de données).

Si un jeton d'exécution correspondant à l'identifiant n'existe pas encore, il est créé à l'étape 82, et un état courant associé au jeton d'exécution est initialisé.

Si un jeton d'exécution correspondant à l'identifiant existe, une étape 84 de lecture de l'état courant associé au jeton d'exécution est mise en œuvre.

Une action à effectuer associée à l'état courant est déterminée à l'étape de détermination 86.

En cas de présence d'une action à effectuer (réponse oui au test 88), l'exécution 90 de l'action est mise en œuvre.

Les actions à effectuer comprennent des tâches à effectuer via les instances 16 du service d'orchestration (étape 90A) ainsi que des opérations internes à la base de données 14, comme par exemple l'exécution 90B d'un script interne à la base de données, la création 90C d'un jeton « enfant » du jeton d'exécution courant, ou une autre opération 90D. Bien entendu, ces actions sont données à titre d'exemple, le nombre d'actions/opérations internes n'étant pas limité.

L'exécution d'actions est itérée jusqu'à ce qu'il ne reste plus d'action à effectuer (réponse « Non » au test 88) pour réaliser la transition associée au jeton d'exécution courant.

Le procédé comporte alors une vérification 92 de fin de l'exécution du processus (jeton à l'état terminé).

En cas de réponse négative à l'étape de vérification 92, un état associé au jeton courant est mémorisé en tant qu'état final Ef de fin de transition dans une mémoire de la base de données 14, à l'étape de mémorisation 94.

En cas de réponse positive à l'étape de vérification 92, donc si le processus est terminé, le jeton courant est supprimé à l'étape de suppression 96.

Pour l'exécution 90A d'une tâche Tsk_i, le procédé comprend, comme montré dans la figure 3, une mise en file d'attente 66 de la tâche Tsk_i par le module 42 de gestion ordonnancée des tâches à exécuter et une distribution 68 de la tâche Tsk_i sur une des instances 16j du service d'orchestration.

Selon un mode de réalisation, l'instance 16j du service d'orchestration sollicitée pour l'exécution de la tâche Tsk_i est différente de l'instance 16i du service d'orchestration qui a transmis l'évènement de déclenchement de l'exécution. Par exemple, l'instance 16j du service d'orchestration est sélectionnée par un mécanisme d'attribution circulaire des tâches à exécuter, connue sous le nom de mécanisme de « round robin », ce mécanisme définissant un ordre de traitement.

La requête d'exécution de la tâche Tsk_i est par exemple mise en œuvre via le groupe de distribution des tâches à exécuter mis en place à l'étape 56 décrite ci-dessus, toutes les instances du service d'orchestration étant abonnées à ce groupe de distribution des tâches à exécuter et étant à l'écoute des messages publiées dans ce groupe.

De préférence, lors de l'étape 68, dès que la tâche Tsk_i est distribuée à une instance 16j du service d'orchestration, un compteur temporel associé est initialisé et surveillé par le module 44 de distribution des tâches à exécuter. Cela permet de surveiller la réception d'un acquittement de réalisation de la tâche Tsk_i en une durée Dmax prédéterminée, et de redistribuer l'exécution de la tâche Tsk_i à une autre instance 16k du service d'orchestration en l'absence d'acquittement avant l'écoulement de la durée Dmax prédéterminée.

L'instance 16j du service d'orchestration reçoit la requête d'exécution de tâche (étape 70), et effectue 72 un appel d'exécution de fonction, par exemple auprès d'un serveur de calculs distant.

Le serveur de calcul distant 6 effectue les calculs demandés et renvoie 74 un résultat.

Dans certaines conditions, par exemple en cas d'indisponibilité des ressources calculatoires ou des ressources de communication, le résultat ne parvient pas à l'instance 16j du service d'orchestration.

Suite à une réception de résultat, l'instance 16j du service d'orchestration effectue (étape 75) un appel du script, avec l'identifiant unique du script, l'identifiant du jeton et un évènement Ev qui indique le succès ou l'échec de la fin de tâche. Cet appel 75 est analogue à une transmission de commande d'exécution du script, avec l'évènement Ev comme évènement déclencheur. En complément optionnel, l'appel de l'étape 75 comporte en outre des arguments supplémentaires, comportant par exemple des résultats de l'exécution de la tâche.

En réception de la commande d'exécution transmise à l'étape 75, la base de données 14 génère une nouvelle tâche Tsk_i+1 pour le processus, selon le script d'exécution de transitions et redémarre (étape 66) un nouveau cycle de traitement tel que décrit en référence à la figure 4, comprenant par exemple un nouvel appel d'exécution 72 pour la tâche suivante Tsk_i+1.

Suite à une confirmation de suite de traitement par la base de données, l'instance 16j du service d'orchestration envoie 77 un message d'acquittement d'exécution de la tâche Tsk_i à la base de données 14, qui est réceptionné par le module de distribution de tâches 44 de la base de données 14.

En l'absence de réception d'acquittement avant l'écoulement de la durée Dmax prédéterminée, la tâche Tsk_i est redistribuée, via le groupe de consommateurs, et son exécution est prise en charge par une autre instance 16 du service d'orchestration.

Avantageusement, dans des applications pratiques, le procédé et système d'orchestration d'exécution de tâches logicielles permettent d'orchestrer de manière efficace des centaines de tâches logicielles.

Avantageusement, une mise à jour en temps réel des versions de diagrammes d'exécution («workflow ») est gérable grâce à la possibilité d'utiliser plusieurs scripts dans la base de données 14, chaque script étant identifié par un identifiant de script unique.

## Revendications

1. Procédé d'orchestration d'exécution de tâches logicielles mis en œuvre par un système d'orchestration (4) comportant au moins une instance (16, 16i, 16j, 16k) d'un service d'orchestration d'exécution de tâches selon des diagrammes d'exécution de processus (35) comportant des états d'exécution et des transitions entre états définissant des tâches à exécuter, et une base de données (14) à haute disponibilité, la ou chaque instance (16, 16i,16j,16k) du service d'orchestration étant configurée pour communiquer avec ladite base de données (14),
**caractérisé en ce que**, lors d'une phase d'initialisation (100), la ou chaque instance (16, 16i, 16j, 16k) du service d'orchestration est configurée pour commander un chargement (50) d'une structure de données représentatives des diagrammes d'exécution de processus dans la base de données (14),
le procédé comportant en outre dans une phase opérationnelle (200), des étapes, par une instance du service d'orchestration (16, 16i, 16j, 16k), suite à une réception d'une requête d'exécution de processus, de :
transformation (58) de la requête d'exécution reçue en un évènement de déclenchement de l'exécution d'un processus associé,
mise en forme (60) dudit évènement de déclenchement en une commande d'exécution par ladite base de données du processus associé à l'évènement de déclenchement, et une transmission de la commande d'exécution à la base de données,
le procédé étant **caractérisé en outre en ce que**, sur réception de ladite commande d'exécution, ladite base de données (14) met en œuvre un mécanisme d'exécution du processus associé à l'évènement de déclenchement, comportant une exécution (64) d'au moins une transition entre états et une mémorisation d'états d'exécution dans ladite base de données.

2. Procédé selon la revendication 1, dans lequel la mise en œuvre du mécanisme d'exécution comporte au moins une détermination de tâche à exécuter, une tâche à exécuter étant identifiée par un identifiant de tâche, et une distribution des tâches à exécuter, selon un ordre déterminé, à des instances du service d'orchestration.

3. Procédé selon la revendication 2, comportant, suite à une transmission d'une tâche à exécuter à une instance du service d'orchestration donnée, une initialisation d'un compteur temporel, une surveillance d'une réception d'un acquittement de l'exécution de ladite tâche à exécuter, et en l'absence d'acquittement avant que ledit compteur temporel atteigne une durée prédéterminée, une distribution de ladite tâche à exécuter à une autre instance du service d'orchestration.

4. Procédé selon l'une quelconque des revendications 2 ou 3, dans lequel la mise en œuvre du mécanisme d'exécution comporte, suite à une réception d'acquittement d'exécution d'une tâche à exécuter, une distribution d'une tâche à exécuter suivante.

5. Procédé selon l'une quelconque des revendications 1 à 4, dans lequel lors de la phase d'initialisation (100), chaque instance (16i, 16j, 16k) du service d'orchestration souscrit (54) à un groupe de distribution de tâches à exécuter géré par la base de données (14).

6. Procédé selon l'une quelconque des revendications précédentes, ladite structure de données étant un script, dans lequel lors de la phase opérationnelle (200), ladite commande d'exécution transmise à la base de données comporte un identifiant dudit évènement de déclenchement et un identifiant unique dudit script.

7. Procédé selon la revendication 6, dans lequel suite à ladite commande d'exécution, la base de données (14) met en œuvre une exécution de transition entre états d'exécution du processus comportant une initialisation d'un jeton d'exécution et d'un état d'exécution courant, puis une détermination d'une action à effectuer dans l'état d'exécution courant et une mise en œuvre de ladite action jusqu'à ce que toutes les actions à effectuer soient terminées.

8. Programme d'ordinateur comportant des instructions logicielles qui, lorsqu'elles sont mises en œuvre par un dispositif électronique programmable, mettent en œuvre un procédé d'orchestration d'exécution de tâches logicielles conforme aux revendications 1 à 7.

9. Système d'orchestration d'exécution de tâches logicielles comportant au moins une instance d'un service d'orchestration d'exécution de tâches selon des diagrammes d'exécution de processus comportant des états d'exécution et des transitions entre états définissant des tâches à exécuter, et une base de données à haute disponibilité, la ou chaque instance du service d'orchestration étant configurée pour communiquer avec un service de base de données à haute disponibilité, ledit système étant configuré pour mettre en œuvre un procédé d'orchestration d'exécution de tâches logicielles selon les revendications 1 à 7.
